# EUROPÄISCHE PATENTSCHRIFT

(11) **EP 0 455 589 B1**
(45) Veröffentlichungstag und Bekanntmachung des Hinweises auf die Patenterteilung: **31.07.1996**
(21) Anmeldenummer: 91810304.5
(22) Anmeldetag: 24.04.1991
(51) Int. Cl.: H01H 85/20, H02B 1/26, H01F 38/28

(54) **Untersatz für eine mit einem Stromwandler versehene NH-Sicherungs- oder Lastschalteinrichtung**
Base for a low voltage-high power fuse or load-break device provided with a current transformer
Base pour un dispositif de coupe-circuit ou d'interruption en charge à basse tension et forte puissance muni d'un transformateur de courant

(30) Priorität: 26.04.1990 CH 1432/90
(43) Veröffentlichungstag der Anmeldung: 06.11.1991
(73) Patentinhaber: WEBER AG, CH-6020 Emmenbrücke (CH)
(72) Erfinder: Arnold, Urs, CH-6210 Sursee (CH)
(74) Vertreter: Lauer, Joachim, Dr.

(56) Entgegenhaltungen:
- EP-A- 0 270 995
- DE-B- 1 640 516
- DE-U- 7 223 005
- DE-U- 7 935 055
- US-A- 2 892 167
- US-A- 3 273 022
- PROSPEKT N 5 III. 54 der Firma DR.-ING. HANS RITZ MESSWANDLERWERK GMBH, MÄRTZ 1954, HAMBURG DE, Seiten 1-2 : 'Lochscheiben-Strom wandler KDR'
- Prospekt 8.70.1 WEBER VERTI GROUP vom Mai 1983

## Beschreibung

### Technisches Gebiet

Die vorliegende Erfindung betrifft einen Untersatz für eine mit einem Stromwandler versehene NH-Sicherungs- oder NH-Lastschalteinrichtung zur Montage auf einer Sammelschiene, wobei der Untersatz ein Gehäuse mit einer vorgegebenen Bauhöhe und mit einer in Richtung der Bauhöhe durchgehenden Ausnehmung im vorgesehenen Anschlussbereich der Sammelschiene aufweist. In diese Ausnehmung ist als Anschlusselement an die Sammelschiene ein in der Ausnehmung in Richtung der Bauhöhe verlaufender flacher Stromleiter eingesetzt, welcher einen parallel zur vorgesehenen Montageebene für die Sammelschiene abgebogenen, mit einem Loch für eine Verbindungsschraube zur Sammelschiene versehenen Abschnitt aufweist. Der Stromwandler ist zwischen der vorgesehenen Montageebene für die Sammelschiene und dem genannten parallel zu dieser abgebogenen Abschnitt des Stromleiters angeordnet. Er weist einen Ringkern auf, durch welchen die genannte Verbindungsschraube als Primärwicklung des Stromwandlers durchgesteckt ist. Durch die durchgehende Ausnehmung im Gehäuse des Untersatzes ist die Verbindungsschraube von der Oberseite des Untersatzes her direkt zugänglich.

Der Untersatz kann einpolig zur Montage auf nur einer Sammelschiene, jedoch auch mehrpolig zur Montage auf mehreren Sammelschienen ausgebildet sein. Bei mehrpoliger Ausbildung ist das Gehäuse mit einer der Polzahl entsprechenden Anzahl von Ausnehmungen in den dann mehreren Anschlussbereichen an mehrere Sammelschienen versehen, in die jeweils Anschlusselemente der genannten Art eingesetzt sind. Zwischen den parallel zu den vorgesehenen Montageebenen für die mehreren Sammelschienen abgebogenen Abschnitten und den vorgesehenen Montageebenen für die Sammelschienen sind dann auch jeweils Stromwandler vorgesehen.

### Stand der Technik (Prospekt 8.70.1 WEBER VERTI GROUP vom Mai 1983).

Bei den heute handelsüblichen Untersätzen für NH-Sicherungs- oder NH-Lastschalteinrichtungen sind Stromwandler nicht standardmässig vorgesehen. Sie sind zur Aufnahme von Stromwandlern entsprechend auch nicht ausgebildet. Der genannte Abschnitt des als Anschlusselement an die Sammelschiene dienenden Stromleiters ist bei ihnen ausserhalb der Bauhöhe des Gehäuses angeordnet und kann dadurch direkt auf die Sammelschiene aufgeschraubt werden. Sofern zusätzlich ein Stromwaidler erwünscht ist, muss dieser zwischen der Sammelschiene und dem genannten Abschnitt eingefügt werden. Dadurch erhöht sich allerdings die gesamte Bauhöhe der Einrichtung über der Sammelschiene um die Höhe des Stromwandlers in nachteiliger Weise.

### Darstellung der Erfindung

Es ist Aufgabe der vorliegenden Erfindung, einen Untersatz der eingangs genannten Art anzugeben, bei dem durch den Stromwandler sich keine nachteilige Erhöhung der gesamten Bauhöhe ergibt. Diese Aufgabe wird erfindungsgemäss gelöst durch einen Untersatz mit den Merkmalen des Patentanspruchs 1. In Anspruch 2 ist eine bevorzugte Ausführungsform des erfindungsgemässen Untersatzes gekennzeichnet.

Gemäss der erfindung wird demnach der parallel zur vorgesehenen Montageebene für die Sammelschiene abgebogene Abschnitt des Stromleiters sowie im wesentlichen auch der Stromwandler selbst bezüglich seiner sich in Richtung der Bauhöhe des Gehäuses erstreckenden Höhe innerhalb der genannten Ausnehmung im Gehäuses angeordnet. Durch die Erfindung wird dadurch der freie Raum in der Ausnehmung zur wenigstens teilweisen Aufnahme des Stromwandlers in vorteilhafter Weise ausgenutzt.

Die Bauhöhe des Gehäuses und damit die Tiefe der Ausnehmung im Gehäuse ist bei den handelsüblichen mehrpoligen Untersätzen für die erfindungsgemässe Ausbildung vollausreichend. Sie wird nämlich im wesentlichen bestimmt durch die Breite von Stromleitern, welche von den NH-Sicherungs- oder Lastschaltelementen zu den Abgangsklemmen führen und beträgt typisch einige Zentimeter. Aus Gründen einer einheitlichen Bauhöhe werden auch die einpoligen Untersätze üblicherweise mit einer entsprechenden Bauhöhe ausgeführt.

Nachstehend wird die Erfindung noch anhand eines Ausführungsbeispiels unter Bezugnahme auf die beigefügten Zeichnungen näher erläutert.

### Kurze Beschreibung der Zeichnungen

In den Zeichnungen zeigt
- Fig. 1: perspektivischer Darstellung einen Abschnitt eines mehrpoligen, auf eine Sammelschiene montierten Untersatzes einer NH-Sicherungs- oder NH-Lastschalteinrichtungen,
- Fig. 2: einen Schnitt durch den Untersatz von Fig. 1, und
- Fig. 3: in einer Darstellung gemäss Fig. 2 eine dem bisherigen Stand der Technik entsprechende Ausführungsform zum Vergleich. Dieser Stand der Technik war jedoch am Prioritätstag nicht bekannt.

In den Figuren sind übereinstimmende Teile mit den gleichen Bezugszeichen versehen.

### Weg zur Ausführung der Erfindung

In den Figuren ist mit 1 eine Sammelschiene bezeichnet. Auf die Sammelschiene 1 ist mittels einer Verbindungsschraube 2 ein Untersatz 3 einer NH-Sicherungs- oder NH-Lastschalteinrichtung aufgeschraubt. Die vollständige Einrichtung weist noch ein auf den Untersatz aufgesetztes Oberteil auf, welches die Sicherungs- oder die Lastschaltelemente enthält. Dieses Oberteil ist in den Figuren nicht dargestellt, weil es im Rahmen der vorliegenden Erfindung auf seine Ausbildung nicht ankommt.

Der Untersatz 3 weist ein Gehäuse 4 mit einer Bauhöhe H auf. Im Anschlussbereich an die Sammelschiene 1 ist im Gehäuse 4 eine durchgehende Ausnehmung 5 vorgesehen. In diese Ausnehmung 5 ist als Anschlusselement an die Sammelschiene 1 ein winklig abgebogener, im Profil flacher Stromleiter 6 eingesetzt. Dieser weist einen parallel zur Sammelschiene 1 abgebogenen Abschnitt 7 auf, der mit einem Loch für die Verbindungsschraube 2 versehen ist. Durch die Ausnehmung 5 ist der Kopf der Verbindungsschraube von oben zugänglich so dass der Untersatz 3 von oben auf die Sammelschiene 1 aufschraubbar ist.

Zwischen dem Abschnitt 7 des Stromleiters 6 und der Sammelschiene 1 ist ein als Ringkernwandler ausgeführter Stromwandler 8 angeordnet, der zur Messung des von der Sammelschiene durch die NH-Sicherungs- oder NH-Lastschalteinrichtung abfliessenden Stromes dient. Als Primärwicklung dient dem Stromwandler 8 die Verbindungsschraube 2.

Gemäss der Erfindung ist der Abschnitt 7 des Stromleiters 6 innerhalb der Ausnehmung 5 im Gehäuse 4 des Untersatzes 3 angeordnet und zwar vorzugsweise in deren Mitte auf etwa halber Bauhöhe H. Damit kommt auch der grösste Teil des Stromwandlers 8 innerhalb der Ausnehmung 5 zur Anordnung. Der in der Ausnehmung 5 zur Verfügung stehende, durch die Bauhöhe H bedingte freie Raum wird in vorteilhafter Weise zur teilweisen Aufnahme des Stromwandlers 8 ausgenutzt.

Die für die erfindungsgemässe Ausbildung voll ausreichende Bauhöhe H des Gehäuses ergibt sich im wesentlichen aus der Höhe von in Längsrichtung des Gehäuses 4 verlaufenden Kanälen 9, die zur Aufnahme von flachen Stromleitern dienen, welche die (nicht dargestellten) NH-Sicherungs- oder Lastschaltelemente mit den (ebenfalss nicht dargestellten) Abgangsklemmen verbinden. Die Höhe der genannten Kanäle wird wiederum bestimmt durch den zur Stromführung erforderlichen Querschnitt bzw. die daraus resultierende Breite der genannten flachen Stromleiter.

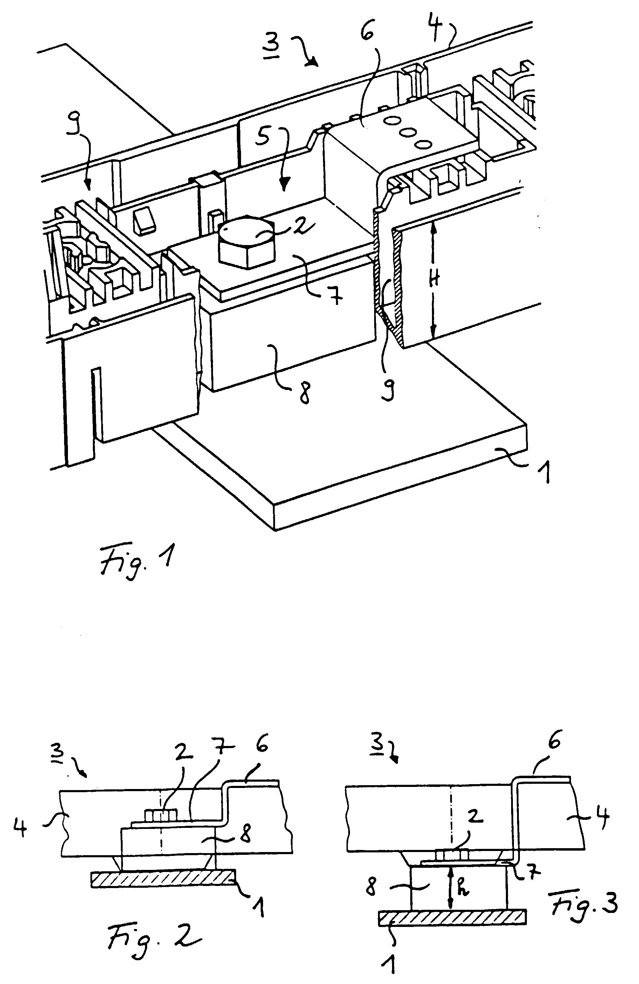

Fig. 3 zeigt eine dem bisherigen Stand der Technik entsprechende Ausführungsform, bei der der freie Raum in der Ausnehmung 5 nicht ausgenutzt und der Stromwandler 8 vollständig ausserhalb des Gehäuses angeordnet ist. Hier ergibt sich eine nachteilig grosse gesamte Bauhöhe über der Sammelschiene 1.

## Patentansprüche

1. Untersatz (3) für eine mit einem Stromwandler (8) versehene NH-Sicherungs- oder NH-Lastschalteinrichtung zur Montage auf einer Sammelschiene (1), wobei der Untersatz ein Gehäuse (4) mit einer vorgegebenen Bauhöhe (H) und mit einer in Richtung der Bauhöhe durchgehenden Ausnehmung (5) im vorgesehenen Anschlussbereich der Sammelschiene aufweist, in welche Ausnehmung als Anschlusselement an die Sammelschiene ein in der Ausnehmung in Richtung der Bauhöhe verlaufender flacher Stromleiter (6) eingesetzt ist, welcher weiter einen parallel zur vorgesehenen Montageebene für die Sammelschiene abgebogenen, mit einem Loch für eine Verbindungsschraube (2) zur Sammelschiene versehenen Abschnitt (7) aufweist, wobei der Stromwandler zwischen der vorgesehenen Montageebene für die Sammelschiene und dem genannten parallel zu dieser abgebogenen Abschnitt des Stromleiters angeordnet ist und einen Ringkern aufweist, durch welchen die genannte Verbindungsschraube als Primärwicklung des Stromwandlers durchgesteckt ist, wobei der genannte abgebogene Abschnitt des Stromleiters sowie wenigstens teilweise auch der Stromwandler selbst bezüglich seiner sich in Richtung der Bauhöhe des Gehäuses erstreckenden Höhe innerhalb der genannten Ausnehmung im Gehäuse angeordnet sind.

2. Untersatz nach Anspruch 1, dadurch gekennzeichnet, dass der genannte Abschnitt des Stromleiters etwa mittig auf halber Bauhöhe in der genannten Ausnehmung im Gehäuse angeordnet ist und dass der Stromwandler nur etwa mit einem Drittel seiner Höhe über das Gehäuse vorsteht.

## Claims

1. Base (3) for a low-voltage high rupture capacity protective device or low-voltage high rupture capacity load switching device provided with a current transformer (8), for mounting on a busbar (1), the base having a housing (4) with a predetermined physical height (H) and with a recess (5), which is continuous in the direction of the physical height, in the intended connecting region of the busbar, into which recess a flat electrical conductor (6) is inserted as a connecting element to the busbar, which electrical conductor (6) runs in the direction of the physical height in the recess and furthermore has a section (7) which is bent parallel to the intended mounting plane for the busbar and is provided with a hole for a connecting screw (2) to the busbar, the current transformer being arranged between the intended mounting plane for the busbar and the said section of the electrical conductor which is bent parallel thereto, and having an annular core through which the said connecting screw is passed as the primary winding of the current transformer, the said bent section of the electrical conductor and, at least partially, the current transformer itself as well being arranged, with respect to its height extending in the direction of the physical height of the housing, within the said recess in the housing.

2. Base according to Claim 1, characterized in that the said section of the electrical conductor is arranged approximately centrally at half the physical height in the said recess in the housing, and in that only approximately one third of the height of the current transformer projects beyond the housing.

## Revendications

1. Support (3) pour un dispositif coupe-circuit B.T. haut pouvoir de coupure ou un dispositif de commutation de charge B.T. à haut pouvoir de coupure équipé d'un transformateur de courant (8) destiné à son montage sur un rail collecteur (1), le support étant muni d'un boîtier (4) ayant une hauteur prédéfinie (H) et un creux (5) continu dans le sens de la hauteur dans la zone de raccordement prévue du rail collecteur, un conducteur électrique (6) plat s'étendant dans le sens de la hauteur et servant d'élément de raccordement au rail collecteur étant logé dans ledit creux, ledit conducteur électrique (6) présentant également une section (7) parallèle au plan de montage prévu pour le rail collecteur, pliée et munie d'un orifice pour une vis d'assemblage (2) sur le rail collecteur, le transformateur de courant étant disposé entre le plan de montage prévu pour le rail collecteur et ladite section pliée du conducteur électrique parallèle à celui-ci et présentant un tore qui est traversé par ladite vis d'assemblage pour servir d'enroulement primaire du transformateur de courant, ladite section pliée du conducteur électrique ainsi qu'au moins une partie du transformateur de courant lui-même, par rapport à sa hauteur s'étendant dans le sens de la hauteur du boîtier, étant disposées à l'intérieur dudit creux dans le boîtier.

2. Support conforme à la revendication 1, caractérisé par le fait que ladite section du conducteur électrique est disposée approximativement au centre à mi-hauteur dans ledit creux dans le boîtier et que le transformateur de courant ne dépasse du boîtier que d'environ un tiers de sa hauteur.
